# EUROPÄISCHE PATENTSCHRIFT

(11) **EP 1 593 549 B1**
(45) Veröffentlichungstag und Bekanntmachung des Hinweises auf die Patenterteilung: **15.08.2007**
(21) Anmeldenummer: 05102827.2
(22) Anmeldetag: 11.04.2005
(51) Int. Cl.: B60Q 1/08, B60Q 1/14

(54) **Beleuchtungseinrichtung für Fahrzeuge**
Illumination device for vehicles
Dispositif d'illumination pour véhicules

(30) Priorität: 05.05.2004 DE 102004022168
(43) Veröffentlichungstag der Anmeldung: 09.11.2005
(73) Patentinhaber: Hella KGaA Hueck & Co., 59552 Lippstadt (DE)
(72) Erfinder: Irmscher, Tobias, 59555 Lippstadt (DE); Kempkensteffen, Martin, 59556 Lippstadt (DE); Kalze, Franz-Josef, 33428 Harsewinkel (DE)

(56) Entgegenhaltungen:
- WO-A-01/98708
- FR-A- 2 730 035
- US-A1- 2001 019 482

## Beschreibung

Die Erfindung betrifft eine Beleuchtungseinrichtung für Fahrzeuge mit zwei Hauptscheinwerfern für sichtbares Abblendlicht, Fernlicht und Positionlicht und mit einer Lichtfunktion für Infrarotlicht.

Kraftfahrzeuge sind in bekannter Weise mit Beleuchtungseinrichtungen zur Erzeugung von Abblendlicht und Fernlicht ausgerüstet. Bei eingeschalteten Fernlicht wird ein großer Sichtbereich des Fahrzeuglenkers ausgeleuchtet, jedoch muss bei der Begegnung zweier Fahrzeuge das Fernlicht ausgeschaltet werden, da sonst der jeweils entgegenkommende Fahrzeuglenker geblendet würde. Von dem eingeschalteten Abblendlicht wird nur ein wesentlich kleinerer Sichtbereich des Fahrzeuglenkers ausgeleuchtet, so dass in seiner Fahrtrichtung eventuell vorhandene Hindernisse erst spät ausgeleuchtet und vom Fahrzeuglenker erkannt werden. Abhilfe schafft eine bekannte Beleuchtungseinrichtung für Fahrzeuge nach der EP - B - 0 479 634. Der Hauptscheinwerfer weist hinter einer gemeinsamen Lichtscheibe einen Reflektor für das sichtbare Abblendlicht auf und einen Reflektor für sichtbares und infrarotes Fernlicht auf. Durch ein schwenkbares IR-Filter ist zwischen sichtbaren und infrarotem Fernlicht schaltbar. Eine am Fahrzeug angebracht Infrarotkamera erfasst den vom Infrarotlichtbündel ausgeleuchteten Bereich, der auf einem im Sichtbereich des Fahrzeuglenkers angebrachten Anzeigegerät dargestellt wird. So kann der Fahrzeuglenker auf dem Anzeigegerät auch bei eingeschaltetem Abblendlicht entfernt liegende Hindernisse frühzeitig erkennen, ohne dass ein entgegenkommender Fahrzeuglenker geblendet wird. Um den unerwünschten Rotlichteindruck des IR-Fernlichtscheinwerfers zu reduzieren bzw. den Eindruck eines weißen Lichts zu erhalten kann an dem Filter sichtbares Licht vorbeigehen (siehe EP - A - 1 139 011).

Aus der DE - C - 39 32 216 ist eine Beleuchtungseinrichtung für Fahrzeuge bekannt, bei der die Hauptscheinwerfer jeweils zwei Lichtmodule aufweisen, die jeweils einer Karosserieöffnung des Fahrzeugs zugeordnet sind. Bei solchen Beleuchtungseinrichtungen ist es in der Praxis üblich, dass die beiden Lichtmodule der Hauptscheinwerfer jeweils einen gemeinsamen Scheinwerferträger aufweisen.

Ein Lichtmodul der Hauptscheinwerfer dient zur Erzeugung des sichtbaren Abblendlichts, während das andere Lichtmodul ein verschiebbares IR-Filter aufweist, durch welches infrarotes bzw. sichtbares Fernlicht schaltbar ist.

Bei den beiden Beleuchtungseinrichtungen für Fahrzeuge nach der EP - B - 0 479 634 und der DE - C - 39 32 216 ist es nachteilig, dass die Hauptscheinwerfer nur bei Beleuchtungseinrichtungen mit Infrarotlicht einsetzbar sind. Aus US-A-20010019482 ist eine gattungsgemäße Beleuchtungseinrichtung für Fahrzeuge bekannt.

Aufgabe der Erfindung ist es, die im Oberbegriff des Anspruchs 1 beschriebene Beleuchtungseinrichtung für Fahrzeuge derart zu gestalten, dass die Hauptscheinwerfer bei Beleuchtungseinrichtungen mit und ohne Infrarotlichtfunktion einsetzbar sind. Zur Lösung dieser Aufgabe ist die Erfindung in Verbindung mit dem Oberbegriff des Patentanspruchs 1 dadurch gekennzeichnet, dass
- die Lichtfunktion für Infrarotlicht durch separiert von den Hauptscheinwerfern am Fahrzeug anbaubaren Nebenscheinwerfern schaltbar ist, wobei bei eingeschalteten Nebenscheinwerfern diese zusätzlich zum Infrarotlicht ein sichtbares Positionslicht erzeugen,
- eine elektrische Steuereinrichtung besteht, die beim Ausschalten der Nebenscheinwerfer automatisch das Positionslicht der Hauptscheinwerfer schaltet, bzw. beim Einschalten ausscheltet.

Dadurch sind bei eingeschaltetem Infrarotlicht bzw. eingeschalteten Nebenscheinwerfern von vier Positionslichtern nur zwei in Funktion. Dies ist vorteilhaft, da nur zwei eingeschaltete Positionslichter gesetzlich zugelassen sind. Weiterhin wird durch das weiße Positionslicht der durch das Infrarotlicht entstehende Rotlichteindruck der Nebenscheinwerfer soweit geschwächt, dass nur weißes Positionslicht zu sehen ist und somit auch in diesem Punkt die gesetzlichen Vorschriften erfüllt sind.

Der besondere Vorteil der Erfindung besteht darin, wenn durch die Steuereinrichtung in Abhängigkeit von mindestens einem Parameter automatisch zwischen der aus Infrarot- und Positionslicht bestehenden Lichtfunktion der Nebenscheinwerfers und einer Lichtfunktion für sichtbares Positionslicht der Hauptscheinwerfer umschaltet wird. In diesem Zusammenhang ist es vorteilhaft, wenn die Umschaltung durch die Steuereinrichtung von der Geschwindigkeit des Fahrzeugs abhängig ist und zwischen 0 km/h und 70 km/h, vorzugsweise zwischen 20 km/h und 50 km/h, liegt. Dadurch ist ab einer kritischen Geschwindigkeit automatisch zum Abblendlicht das Infrarot-Fernlicht hinzuschaltet.

Nach einer Weiterbildung der Erfindung sind die Nebenscheinwerfer für infrarotes Fernlicht separiert von einem Träger des Hauptscheinwerfers an dem Fahrzeug anbringbar. Dadurch kann ein Fahrzeug mit einem Infrarotlicht erzeugenden Nebenscheinwerfer nachgerüstet werden.

Bei einer besonders vorteilhaften Weiterbildung der Erfindung weisen die Hauptscheinwerfer eine für Fernlicht dienende Gasentladungslampe auf, wobei die Nebenscheinwerfer eine Halogenlampe aufweisen und durch ein verstellbares Infrarotfilter zwischen infrarotem und sichtbaren Fernlicht umschaltbar sind. Hierbei sind die Nebenscheinwerfer für die Fernlichthupe nutzbar, da eine Halogenlampe schneller Fernlicht bereitstellt als eine Gasentladungslampe.

Bei einer anderen vorteilhaften Weiterbildung der Erfindung weisen die Hauptscheinwerfer eine für Fernlicht dienende Gasentladungslampe aufweisen, wobei die Nebenscheinwerfer LED's für Infrarotlicht und LED's für sichtbares Licht aufweisen. Auch hierbei ist der Nebenscheinwerfer als Fernlichthupe nutzbar. Die weißen und infraroten LED's können gemischt auf einem Träger angeordnet sein.

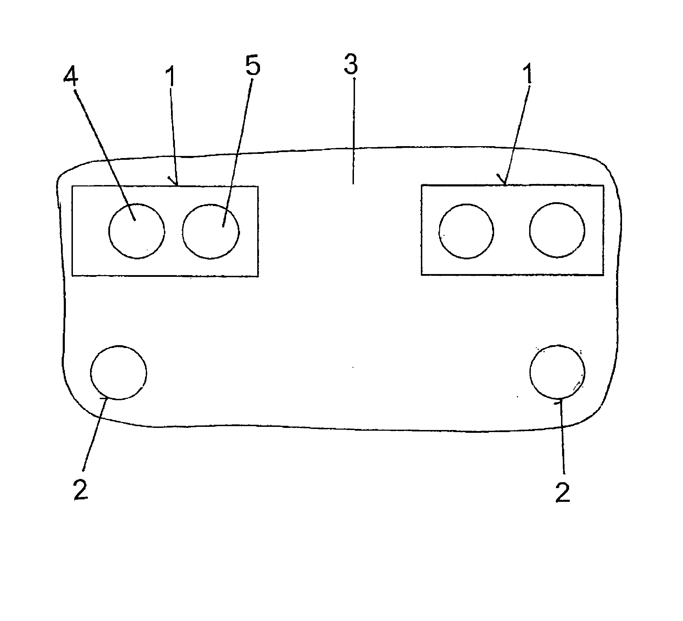

Eine vorteilhafte Ausgestaltung der Erfindung ist anhand des in einer Figur dargestellten Ausführungsbeispiels erläutert. Die Figur zeigt in einer Prinzipskizze einen Ausschnitt eines Frontteils eines Fahrzeuges mit einer Beleuchtungseinrichtung für Fahrzeuge bestehend aus zwei Hauptscheinwerfern für Abblendlicht mit jeweils einem ersten Positionslicht und zwei separaten Nebenscheinwerfern für Infrarotfernlicht mit jeweils einem zweiten Positionslicht.

Die Figur zeigt ein Frontteil eines Fahrzeugs 3, in das zwei Hauptscheinwerfer 1 und zwei Nebenscheinwerfer 2 eingebaut sind. Die Hauptscheinwerfer 1 weisen ein Lichtmodul 4 für Abblendlicht und ein erstes Positionslicht und ein Lichtmodul 5 für Fernlicht auf. In einem Abstand unterhalb der Hauptscheinwerfer 1 sind die Nebenscheinwerfer 2 angeordnet. Die Nebenscheinwerfer 2 erzeugen infrarotes Fernlicht und eine zweites Positionslicht. Zum Erzeugen von infrarotem Fernlicht dient eine Halogenlampe mit zugeordneten Infrarotfilter oder LED's für infrarotes Licht und LED's für weißes PO-Licht. Beim einem Zuschalten der infraroten Fernlichtfunktion und der zweiten Positionslichtfunktion der Nebenscheinwerfer 2 schaltet eine nicht dargestellte elektrische Steuereinrichtung das erste Positionslicht der Hauptscheinwerfer 1 aus. Beim Ausschalten der Nebenscheinwerfer 2 schaltet die elektrische Steuereinrichtung das erste Positionslicht der Hauptscheinwerfer 1 automatisch wieder ein. Durch die elektrische Steuereinrichtung kann auch ein automatisches Umschalten zwischen den Nebenscheinwerfern 2 und dem Positionslicht der Hauptscheinwerfer 1 erfolgen. Das Umschalten erfolgt geschwindigkeitsabhängig. Die Umschaltung erfolgt in beide Richtungen bei einer Geschwindigkeit zwischen 0 km/h und 70km/h, vorzugsweise 40 km/h.

## Patentansprüche

1. Beleuchtungseinrichtung für Fahrzeuge mit zwei Hauptscheinwerfern (1) für sichtbares Abblendlicht, Fernlicht und Positionlicht und mit einer Lichtfunktion für Infrarotlicht, **dadurch gekennzeichnet, dass**
- die Lichtfunktion für Infrarotlicht durch separiert von den Hauptscheinwerfern (1) am Fahrzeug anbaubaren Nebenscheinwerfem (2) schaltbar ist, wobei bei eingeschalteten Nebenscheinwerfem (2) diese zusätzlich zum Infrarotlicht ein sichtbares Positionslicht erzeugen,
- eine elektrische Steuereinrichtung besteht, die beim Ausschalten der Nebenscheinwerfer (2) automatisch das Positionslicht der Hauptscheinwerfer (1) ein schaltet. bzw beim Einschalten ausschaltet.

2. Beleuchtungseinrichtung nach Anspruch 1, **dadurch gekennzeichnet, dass** durch die Steuereinrichtung in Abhängigkeit von mindestens einem Parameter automatisch zwischen der aus Infrarot- und Positionslicht bestehenden Lichtfunktion der Nebenscheinwerfer (2) und einer Lichtfunktion für sichtbares Positionslicht der Hauptscheinwerfer (1) umschaltbar ist.

3. Beleuchtungseinrichtung nach Anspruch 2, **dadurch gekennzeichnet, dass** die Umschaltung durch die Steuereinrichtung von der Geschwindigkeit des Fahrzeugs abhängig ist.

4. Beleuchtungseinrichtung nach Anspruch 3, **dadurch gekennzeichnet, dass** die Umschaltung bei einer Geschwindigkeit zwischen 0 km/h und 70 km/h liegt.

5. Beleuchtungseinrichtung nach Anspruch 4, **dadurch gekennzeichnet, dass** die Umschaltung bei einer Geschwindigkeit zwischen vorzugsweise 20 km/h und 50 km/h liegt.

6. Beleuchtungseinrichtung nach einem der Ansprüche 1 bis 5, **dadurch gekennzeichnet, dass** die Nebenscheinwerfer (2) für infrarotes Fernlicht separiert von einem Träger des Hauptscheinwerfers (1) an dem Fahrzeug anbringbar sind.

7. Beleuchtungseinrichtung nach einem der Ansprüche 1 bis 6, **dadurch gekennzeichnet, dass** die Hauptscheinwerfer (1) eine für Fernlicht dienende Gasentladungslampe aufweisen, wobei die Nebenscheinwerfer (2) durch ein verstellbares Infrarotfilter zwischen infrarotem und sichtbaren Fernlicht umschaltbar sind.

8. Beleuchtungseinrichtung nach einem der Ansprüche 1 bis 6, **dadurch gekennzeichnet, dass** die Hauptscheinwerfer eine für Fernlicht dienende Gasentladungslampe aufweisen, wobei die Nebenscheinwerfer LED's für Infrarotlicht und LED's für sichtbares Licht aufweisen.

## Claims

1. Lighting equipment for vehicles with two headlamps (1) for the visible low beam, high beam and position light featuring a lighting function for infrared light, wherein
- the lighting function for infrared light can be actuated by auxiliary headlamps (2) that install in the vehicle separate from the headlamps (1) and, when turned on, not only generate the infrared light but also a visible position light,
- an electric control unit automatically turns on the position light of the headlamps (1) when the auxiliary headlamps (2) are turned off or turns the position light of the headlamps (1) off when the auxiliary headlamps (2) are turned on.

2. Lighting equipment as in claim 1, wherein the control unit is influenced by the setting of at least one parameter to automatically switch from the lighting function of the auxiliary headlamps (2), consisting of the infrared light plus position light, and a lighting function for visible position light provided by the headlamps (1) and vice versa.

3. Lighting equipment as in claim 2, wherein the switching between functions as controlled by the control unit depends on the speed of the vehicle.

4. Lighting equipment as in claim 3, wherein the switching between functions is performed at speeds between 0 km/h and 70 km/h.

5. Lighting equipment as in claim 4, wherein the switching between functions is preferably performed at speeds between 20 km/h and 50 km/h.

6. Lighting equipment as in one of claims 1 to 5, wherein the auxiliary headlamps (2) for the infrared high beam can be separately attached to the vehicle by means of a carrier of the headlamp (1).

7. Lighting equipment as in one of claims 1 to 6, wherein the headlamps (1) have a HID lamp for generating the high beam and where an adjustable infrared filter is used to set the auxiliary headlamps (2) from an infrared to a visible high beam and vice versa.

8. Lighting equipment as in one of claims 1 to 6, wherein the headlamps have a HID lamp for generating the high beam and where the auxiliary headlamps feature LEDs for infrared light and LEDs for visible light.

## Revendications

1. Dispositif d'éclairage pour véhicules avec deux projecteurs principaux (1) pour l'éclairage code, l'éclairage route et l'éclairage de position visibles et avec une fonction d'éclairage pour la lumière infrarouge, **caractérisé en ce que**
- la fonction d'éclairage pour la lumière infrarouge peut être activée par des projecteurs auxiliaires (2) pouvant être montés sur le véhicule séparément des projecteurs principaux (1), les projecteurs auxiliaires (2) produisant un éclairage de position visible en plus de la lumière infrarouge lorsqu'ils sont activés,
- un dispositif de commande électrique est présent, lequel dispositif active automatiquement l'éclairage de position des projecteurs principaux (1) en cas de coupure des projecteurs auxiliaires (2), ou le coupe en cas d'activation.

2. Dispositif d'éclairage selon la revendication 1, **caractérisé en ce que** le dispositif de commande permet de commuter automatiquement, en fonction d'au moins un paramètre, entre la fonction d'éclairage des projecteurs auxiliaires (2) composée de l'éclairage infrarouge et de l'éclairage de position et une fonction d'éclairage pour l'éclairage de position à lumière visible des projecteurs principaux (1).

3. Dispositif d'éclairage selon la revendication 2, **caractérisé en ce que** la commutation par le dispositif de commande dépend de la vitesse du véhicule.

4. Dispositif d'éclairage selon la revendication 3, **caractérisé en ce que** la commutation s'effectue dans une plage de vitesses allant de 0 km/h à 70 km/h.

5. Dispositif d'éclairage selon la revendication 4, **caractérisé en ce que** la commutation s'effectue dans une plage de vitesses allant de préférence de 20 km/h à 50 km/h.

6. Dispositif d'éclairage selon l'une quelconque des revendications 1 à 5, **caractérisé en ce que** les projecteurs auxiliaires (2) pour l'éclairage infrarouge peuvent être fixés au véhicule séparément d'un support du projecteur principal (1).

7. Dispositif d'éclairage selon l'une quelconque des revendications 1 à 6, **caractérisé en ce que** les projecteurs principaux (1) présentent une lampe à décharge servant à l'éclairage route, les projecteurs auxiliaires (2) pouvant être commutés entre l'éclairage route infrarouge et visible par un filtre infrarouge réglable.

8. Dispositif d'éclairage selon l'une quelconque des revendications 1 à 6, **caractérisé en ce que** les projecteurs principaux présentent une lampe à décharge servant à l'éclairage route, les projecteurs auxiliaires présentant des diodes électroluminescentes pour la lumière infrarouge et des diodes électroluminescentes pour la lumière visible.
